(19) Europäisches Patentamt
European Patent Office
Office européen des brevets

(11) Publication number: **0 234 692**
**A2**

(12) # EUROPEAN PATENT APPLICATION

(21) Application number: 87300261.2

(22) Date of filing: 13.01.87

(51) Int. Cl.³: C 08 L 67/06
C 08 F 283/01

(30) Priority: 22.01.86 GB 8601452

(43) Date of publication of application:
02.09.87 Bulletin 87/36

(84) Designated Contracting States:
AT BE CH DE ES FR GB GR IT LI LU NL SE

(71) Applicant: IMPERIAL CHEMICAL INDUSTRIES PLC
Imperial Chemical House Millbank
London SW1P 3JF(GB)

(72) Inventor: Orton, Michael Leslie
24 School Lane
Hartford Northwich Cheshire(GB)

(72) Inventor: Rogers, Stephen Charles
101 Woodland Road
Whitby South Wirral L65 6PP(GB)

(74) Representative: Stephenson, Kenneth et al,
Imperial Chemical Industries PLC Legal Department: Patents PO Box 6 Bessemer Road
Welwyn Garden City Herts, AL7 1HD(GB)

(54) **Polymerisable compositions.**

(57) A polymerisable composition comprising:
(a) an unsaturated polyester,
(b) styrene and/or an acrylate or methacrylate monomer, and
(c) a compound containing at least two groups of the formula:

R
|
OC C=$CH_2$

O

wherein R represents hydrogen or methyl, said compound being free of urethane or hydroxy groups.

EP 0 234 692 A2

Croydon Printing Company Ltd

POLYMERISABLE COMPOSITIONS

This invention relates to polymerisable compositions and more particularly to such compositions containing unsaturated polyester resins and copolymerisable unsaturated materials.

The copolymerisation of unsaturated polyester resins with unsaturated monomers such as styrene to produce useful moulded plastics articles is well known. In some cases, for example when using cold cure processes, the level of unreacted styrene or other volatile monomer in the demoulded product can be sufficient to cause the product to be too soft at demould, to smell, to undergo post-demould shrinkage and to require a post-cure at some elevated temperature for example 80°C for 3 hours.

It has now been found that the level of unreacted volatile monomer remaining in such products may be significantly reduced by including certain polyacrylate or polymethacrylate compounds in the polymerisable compositions in addition to the unsaturated polyester and volatile monomer.

Accordingly, the invention provides a polymerisable composition comprising:

(a) an unsaturated polyester,

(b) styrene and/or an acrylate or methacrylate monomer, and

(c) a compound containing at least two groups of the formula:

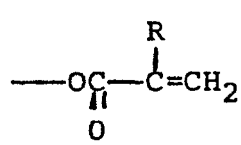

wherein R represents hydrogen or methyl, said compound being free of urethane or hydroxyl groups.

The unsaturated polyester (a) present in the polymerisable composition may be, for example, a general purpose or a speciality polyester, e.g. it may be derived from (i) maleic acid and/or fumaric acid, (ii) phthalic and/or isophthalic acid and/or terephthalic acid and (iii) ethylene glycol and/or propylene glycol and (iv) alkoxylated bisphenols. Unsaturated polyesters prepared from various combinations of the aforesaid components, covering a range of molecular ratios, are well known in the art.

When styrene is employed as the copolymerisable monomer (b), the unsaturated polyester/styrene weight ratio is typically in the range of from about 5:1 to 1:1, for example about 2:1. Similar ratios are applicable when using an acrylate or methacrylate monomer, for example a monomer of the formula:

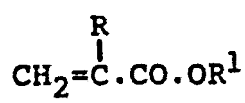

wherein R represents hydrogen or methyl and $R^1$ represents an optionally substituted hydrocarbon or heterocyclic radical. Hydrocarbon radicals include alkyl, cycloalkyl, aryl and aralkyl radicals, especially $C_1$-$C_{10}$ alkyl radicals such as methyl, ethyl, butyl, hexyl and ethoxyethyl radicals. Heterocyclic radicals include 5- and 6-membered rings, for example tetrahydrofurfuryl.

Compounds (c) containing a plurality of acrylate or methacrylate groups may be represented by the formula:

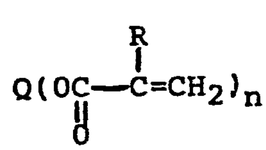

wherein Q is the residue remaining after removal of the hydroxyl groups from an organic polyol and n is an integer of at least 2. The organic polyol may be a simple diol, for example ethylene glycol, propylene glycol, diethylene glycol, 1,4-butanediol or 1,6-hexanediol, a triol, for example glycerol or trimethylolpropane or a higher functionality polyol. Other suitable polyols include polyester polyols, for example the reaction products of the above-mentioned polyols with dicarboxylic acids such as adipic acid and polyether polyols, for example polyoxyalkylene polyols based on ethylene oxide and/or propylene oxide. Still further polyols include bis-glycidyl ethers of bisphenols and oxyethylated or oxypropylated bisphenols.

Thus, the compound (c) may be the reaction product of a (meth)acryloyl halide, e.g. chloride, with a diol derived by ethoxylation and/or propoxylation of a bisphenol as described in US 2890202, e.g. of formula

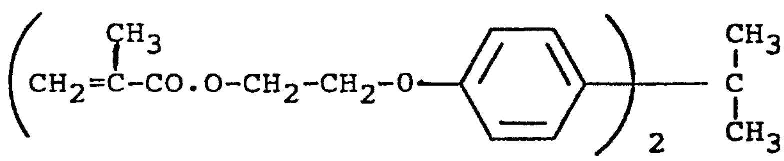

In general, the unsaturated polyester (a) comprises from 2 to 65% by weight of the polymerisable composition, the poly(meth)acrylate compound and volatile monomer comprising from 98 to 35% by weight thereof. The poly(meth)acrylate compound (c) suitably comprises from 5 to 95% of the polymerisable composition on a weight basis.

The composition may also contain an accelerator for accelerating the decomposition of organic peroxides. Suitable accelerators include tertiary aromatic amines, for example N,N-dimethylaniline or N,N-dimethyl-p-toluidine. The concentration of amine accelerator is typically in the range from 0.1 to 0.8% by weight.

The polymerisable compositions may also contain a filler.

Where an inorganic filler is present in polymerisable compositions according to the present invention, it may be present in particulate, plate-like or fibrillar form. Suitable fillers include silica, calcium carbonate, talc, alumina trihydrate, mica, various clays and vermiculite. Glass fibre, either in continuous or chopped strand form or, for example, of aspect ratio from 10/1 to 500/1 (especially from 20/1 to 300/1) may be used as filler. It will be appreciated that where the inorganic filler, where used, is carboxylic acid-reactive a portion thereof may be used to neutralise the polyester.

Where an inorganic filler is present in polymerisable compositions according to the present invention, the weight ratio of total polymerisable material to inorganic filler is typically in the range from 3:1 to 1:3 and often is about 1:1.

When an inorganic filler is used, a suitable "coupling agent" may in some cases advantageously be incorporated to link the filler to the polymer matrix. Thus, for example, when the filler is silica a suitable silane coupling agent may be incorporated, for example $\gamma$-methacryl-oxypropyltrimethoxysilane.

Organic polymers, especially thermoplastic polymers, may also be incorporated in polymerisable compositions according to the present invention. One or more organic polymers may either be dissolved in the reaction mixture or added in particulate form, with or without the incorporation of inorganic fillers as already described. Polymers which may be incorporated include polymers and copolymers of alkyl acrylates and/or methacrylates (especially of acrylates and/or methacrylates containing from 1 to 8 carbon atoms in the alkyl group, for example methyl methacrylate); polymers and copolymers of styrene and α-methylstyrene (for example copolymers of styrene with butadiene); polymers and copolymers of acrylonitrile, and polymers and copolymers of vinyl acetate (for example copolymers of vinyl chloride with vinyl acetate). Incorporation of such polymers is often useful in reducing in-mould shrinkage.

In general, the proportion of organic polymer incorporated may be, for example, from 1 to 50 parts by weight (especially from 5 to 25 parts) per 100 parts of polymerisable composition as hereinbefore defined as (a) + (b) + (c), the upper limit depending upon the desired viscosity of the mixture and the desired mechanical properties of the final product.

Other additives such as plasticisers and colourants known in the art may also be incorporated into polymerisable compositions according to the present invention.

The polymerisation of polymerisable compositions according to the present invention may be carried out

using techniques well known in the art of bulk polymerisation. A wide range of polymerisation initiators and concentrations thereof may be used, depending upon the desired temperature and rate of polymerisation. The catalyst may be, for example, a peroxide catalyst which may be heat activated or which may be used in conjunction with an accelerator, e.g. a tertiary amine.

By "peroxide" for use in the present invention we mean an organic peroxide having the formula:

$$R^2-O-O-R^2$$

in which the groups $R^2$, which may be the same or different, are hydrogen, alkyl, aryl or acyl groups, no more than one of the groups $R^2$ being hydrogen. The term acyl groups means groups having the formula:

$$R^3-CO-$$

in which $R^3$ is an alkyl, aryl, alkoxy or aryloxy group or substituted derivatives thereof. A preferred peroxide is dibenzoyl peroxide or a derivative thereof, e.g. 4,4'-dichloro-dibenzoyl peroxide.

A suitable combination in many cases for moulding temperatures less than 80°C is, for example, dibenzoyl peroxide in conjunction with N,N-dimethylaniline or N,N-dimethyl-para-toluidine.

A particularly desirable use for polymerisable compositions according to the present invention is for the production of fibre-reinforced composites, especially glass-fibre-reinforced composites, by the usual processes, preferably automated, for example, cold press, resin injection, filament winding.

Polymerisable compositions according to the present invention may also be used in compression moulding processes, for example as dough moulding compounds or sheet moulding compounds. In such processes, the moulding temperature is typically less than 140°C and preferably is between 100°C and 130°C and demoulding may be effected in less than 3 minutes and often effected in less than 1 minute.

Polymerisable compositions according to the present invention can also be used in pultrusion processes. Such processes are typically carried out at less than 200°C.

The invention is illustrated by the following Examples.

Example 1

This Example illustrates the use of the methacrylate diester of 2,2[1]-[isopropylidene bis(p-phenyleneoxy)] diethanol as copolymerisable substance to reduce the residual styrene after polymerisation of a commercially-available polyester resin in styrene.

A composition of 70 parts of weight of the polyester resin (as received from the manufacturers and containing 33% w/w styrene) was mixed with 30 parts by weight of the diester. The mixture was polymerised and analysed for residual volatile monomers by the following method.

Dibenzoyl peroxide (1.00 gram of a 60 w/w solution in plasticiser) was dissolved in the polymerisable composition (60 gram); N,N-dimethyl-p-toluidine (0.12 gram) was then quickly added. The mixture was quickly poured into a cell consisting of

two glass plates which had been treated with mould release wax separated by a 3 mm thick silicone rubber gasket.

The polymerised product was demoulded 10 minutes after peak exotherm and immediately cut into small samples (approximately 1.5 cm x 0.5 cm), the samples which came from the edges of the product were rejected. Portions (weighing approximately 3.6 grams) were accurately weighed into a 25 ml volumetric flask. The volume was made up with an accurately weighed portion of chloroform (typically 32.4 grams) and the flask was stoppered.

The chloroform/sample mixture was allowed to stand with occasional shaking for 4 days, then chlorobenzene (approximately 0.2 g) was accurately added as internal standard. The residual methyl methacrylate and styrene were determined by gas liquid chromatography; the chromatograph was calibrated with standard solutions of methyl methacrylate, styrene and chlorobenzene. An equal partitioning of residual methyl methacrylate and styrene between swollen product and chloroform was assumed in calculating the total residual amounts in the product before swelling.

The polymer was found to contain 4.1% w/w styrene. A comparative example (CT1) of the polyester resin as received contained 6.5% w/w styrene after polymerisation under the same conditions as above.

The type of polyester, composition of polymerisable mixture and residual monomer results are summarised in Table 1.

Example 2

This Example illustrates the use of the methacrylate diester of 2,2[1]-[isopropylidene bis(p-phenyleneoxy)] diethanol in combination with methyl methacrylate to reduce the residual volatile monomers after polymerisation of a commercially-available polyester resin in styrene.

A composition of 20 parts by weight of the polyester resin (containing 33% w/w styrene as received from the manufacturer) was mixed with 40 parts by weight of the diester and 40 parts by weight of methyl methacrylate. The mixture was polymerised and analysed for residual monomer by the method described in Example 1.

The polymer was found to contain 0.01% w/w styrene and 0.6% w/w methyl methacrylate. The comparative example (CT1) of the polyester resin polymerised under the same conditions contained 6.5% w/w styrene and no methyl methacrylate. The polyester type, composition of polymerisable mixture and residual monomer results are summarised in Table 1.

Example 3

This Example illustrates the use of tetraethylene glycol dimethacrylate to reduce the residual volatile styrene after polymerisation of a commercially-available polyester.

A composition of 80 parts by weight of the polyester resin (containing 38% w/w styrene as received from the manufacturer) was mixed with 20 parts by weight of tetraethylene glycol dimethacrylate. The mixture was polymerised and analysed for residual styrene by the method described in Example 1. A comparative example (CT2) of the polyester resin

without the diester was polymerised and analysed under the same conditions.

The polymer was found to contain 4.5% w/w styrene compared with 8.7% w/w in the comparative example not containing the diester. The polyester type, composition of polymerisable mixture and residual monomer results are summarised in Table 1.

TABLE 1

| Example No | Polyester Type: Ratio M:O:I | (a) Polyester % w/w | (b) Styrene % w/w | (b) Methyl methacrylate % w/w | (c) Copolymerisable substance | (c) % w/w | Polymer Residual Styrene % w/w | Polymer Residual methyl methacrylate % w/w |
|---|---|---|---|---|---|---|---|---|
| CT1 | 1:1:0 | 67.0 | 33.0 | 0 | - | 0 | 6.5 | - |
| 1 | 1:1:0 | 46.9 | 23.1 | 0 | X | 30 | 4.1 | - |
| 2 | 1:1:0 | 13.4 | 6.6 | 40 | X | 40 | 0.01 | 0.6 |
| 4 | 1:1:0 | 53.6 | 26.4 | 0 | Z | 20 | 4.5 | 0 |
| 5 | 1:1:0 | 53.6 | 26.4 | 0 | Y | 20 | 4.1 | 0 |
| 6 | 1:1:0 | 46.9 | 23.1 | 15 | X | 15 | 2.1 | 2.2 |
| CT2 | 3:0:1 | 62.0 | 38.0 | 0 | - | 0 | 8.7 | - |
| 3 | 3:0:1 | 49.6 | 30.4 | 0 | Y | 20 | 4.5 | - |

CT: Comparative Test

M: Maleic Acid

O: Orthophthalic Acid

I: Isophthalic Acid

X: methacrylate diester of $2,2^1$-[isopropylidene bis(p-phenyleneoxy)] diethanol

Y: tetraethylene glycol dimethacrylate

z: trimethylolpropane trimethacrylate

Example 4

This Example illustrates the use of trimethylolpropane trimethacrylate to reduce the residual volatile styrene afer polymerisation of a commercially-available polyester.

A composition of 80 parts by weight of the polyester (containing 33% w/w styrene as received from the manufacturer) was mixed with 20 parts by weight of trimethylolpropane trimethacrylate. The mixture was polymerised and analysed for residual styrene by the method described in Example 1.

The polymer was found to contain 4.5% w/w styrene compared with 6.5% w/w in the comparative sample (CT1). The polyester type, composition of the polymerisable mixture and residual monomer results are summarised in Table 1.

Example 5

This Example illustrates the use of tetraethylene glycol dimethacrylate to reduce the residual volatile styrene after polymerisation of a commercially-available polyester.

A composition of 80 parts by weight of the polyester (containing 33% w/w styrene as received from the manufacturer) was mixed with 20 parts by weight of tetraethylene glycol dimethacrylate. The mixture was polymerised and analysed for residual styrene by the method described in Example 1.

The polymer was found to contain 4.1% w/w styrene compared with 6.5% w/w in the comparative sample (CT1). The polyester type, composition of the polymerisable mixture and residual monomer results are summarised in Table 1.

Example 6

This Example illustrates the use of the methacrylate diester of 2,2[1]-[isopropylidene bis(p-phenyleneoxy)]diethanol in combination with methyl methacrylate to reduce the residual volatile monomers ater polymerisation of a commercially-available polyester.

A composition of 70 parts by weight of the polyester (containing 33% w/w styrene as received from the manufacturer) was mixed with 15 parts by weight of methacrylate diester of 2,2[1]-[isopropylidene bis(p-phenyleneoxy)] diethanol and 15 parts by weight of methyl methacrylate. The mixture was polymerised and analysed for residual styrene by the method described in Example 1.

The polymer was found to contain 2.1% w/w styrene and 2.2% w/w methyl methacrylate compared with 6.5% w/w in the comparative sample (CT1).

The polyester type, composition of the polymerisable mixture and residual monomer results are summarised in Table 1.

Example 7

The Example illustrates the use of butylene-1,3-glycol dimethacrylate to reduce the residual volatile styrene after polymerisation of a commercially-available polyester.

A composition of 70 parts by weight of the polyester (containing 33% w/w styrene as received from the manufacturer) was mixed with 30 parts by weight of butylene-1,3-glycol dimethacrylate. The mixture was polymerised by the following method.

Dibenzoyl peroxide (1.00 gram of a 50% w/w phthalate-extended powder) was dissolved in the polymerisable composition (40 gram); N,N-dimethyl-p-toluidine (0.16 gram) was dissolved in a seond portion (10 gram) of the polymerisable composition. The two portions were then mixed and quickly poured into the cell described in Example 1.

The polymerised product was demoulded 10 minutes after peak exotherm (determined using a thermocouple in the resin) and then treated as in Example 1 to determine the residual volatile styrene.

The polymer was found to contain 3.3% w/w styrene. A comparative sample (CT3) of the polyester as received from the manufacturer contained 8.3% w/w styrene after polymerisation under the same conditions as above.

The polyester type, composition of the polymerisable mixture and residual monomer results are summarised in Table 2.

Example 8

This example illustrates the use of hexane-1,6-glycol dimethacrylate to reduce the residual volatile styrene after polymerisation of a commercially-available polyester.

A composition of 70 parts by weight of the polyester (containing 33% w/w styrene as received from the manufacturer) was mixed with 30 parts by weight of tetraethylene glycol dimethacrylate. The mixture was polymerised and analysed for residual styrene by the method described in Example 7.

The polymer was found to contain 2.7% w/w styrene compared with 8.26% w/w in the comparative

sample (CT3). The polyester type, composition of the polymerisable mixture and residual monomer results are summarised in Table 2.

Example 9

This Example illustrates the use of the methacrylate diester of 2,2[1]-[isopropylidene bis(p-phenyleneoxy)] diethoxyethanol (Diacryl 121) to reduce the residual volatile styrene after polymerisation of a commercially available polyester.

A composition of 70 parts by weight of the polyester (containing 33% w/w styrene as received from the manufacturer) was mixed with 30 parts by weight of the diester. The mixture was polymerised and analysed for residual styrene by the method described in Example 7.

The polymer was found to contain 4.2% w/w styrene compared with 8.26% w/w in the comparative sample (CT3). the polyester type, composition of the polymerisable mixture and residual monomer results are summarised in Table 2.

Example 10

This Example illustrates the use of hexane-1,6-glycol dimethacrylate to reduce the residual volatile styrene after polymerisation of a commercially available polyester in which a thermoplastic polymer has been dissolved.

30 gram of a copolymer of butyl acrylate (45% w/w) and methyl methacrylate (55% w/w) was dissolved in the polyester resin (170 gram, used as received from the manufacturer and containing 33% w/w styrene) and additional styrene (40 gram). The mixture was warmed with stirring to ca 50°C to aid dissolution.

A composition of 70 parts by weight of the polyester resin/thermoplastic copolymer/styrene solution was mixed with 30 parts by weight of hexane-1,6-glycol dimethacrylate. The mixture was polymerised and analysed for residual styrene by the method described in Example 7.

The polymer was found to contain 6.1% w/w styrene. A comparative sample (CT4) of the polyester resin/thermoplastic copolymer/styrene solution polymerised under the same conditions contained 17.2% w/w styrene.

Polyester type, composition of the polymerisable mixture and residual monomer results are summarised in Table 3.

TABLE 2

| Example No | Polyester Type: Ratio M:O:I | (a) Polyester % w/w | Styrene % w/w | (b) Methyl methacrylate % w/w | (c) Copolymerisable substance | (c) % w/w | Polymer Residual Styrene % w/w | Polymer Residual methyl methacrylate % w/w |
|---|---|---|---|---|---|---|---|---|
| CT3 | 1:1:0 | 67.0 | 33.0 | 0 | - | 0 | 8.3 | 0 |
| 7 | 1:1:0 | 46.9 | 23.1 | 0 | W | 30 | 3.3 | 0 |
| 8 | 1:1:0 | 46.9 | 23.1 | 0 | V | 30 | 2.7 | 0 |
| 9 | 1:1:0 | 46.9 | 23.1 | 0 | T | 30 | 4.2 | 0 |

TABLE 3

| Example No | Polyester Type: Ratio M:O:I | (a) Polyester % w/w | (b) Styrene % w/w | (b) Thermoplastic copolymer % w/w | (c) Copolymerisable substance | (c) % w/w | Polymer Residual Styrene % w/w |
|---|---|---|---|---|---|---|---|
| CT4 | 1:1:0 | 47.4 | 40.1 | 12.5 | - | 0 | 17.2 |
| 3 | 1:1:0 | 33.2 | 28.1 | 8.7 | V | 30 | 6.1 |

CT: Comparative Test

W: butylene-1,3-glycol dimethacrylate

V: hexane-1,6-glycol dimethacrylate

T: methacrylate diester of 2,2-[1]-[isopropylidene bis (p-phenyleneoxy)]-diethoxyethanol

CLAIMS

1. A polymerisable composition comprising:

(a) an unsaturated polyester,

(b) styrene and/or an acrylate or methacrylate monomer, and

(c) a compound containing at least two groups of the formula:

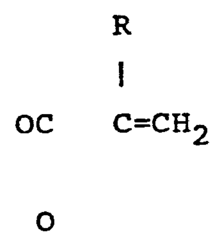

wherein R represents hydrogen or methyl, said compound being free of urethane or hydroxyl groups.

2. A polymerisble composition according to claim 1 wherein components (a) and (b) are present in a weight ratio in the range from about 5:1 to 1:1.

3. A polymerisable composition according to claim 1 which contains a thermoplastic organic polymer.

4. A polymerisable composition according to claim 3 wherein from 1 to 50 parts of organic polymer are present per 100 parts of components (a), (b) and (c).